# EUROPÄISCHE PATENTANMELDUNG

(11) **EP 3 627 682 A1**
(43) Veröffentlichungstag der Anmeldung: **25.03.2020**
(21) Anmeldenummer: 19194811.6
(22) Anmeldetag: 01.09.2019
(51) Int. Cl.: H02M 5/14, H02P 1/26

(54) **SCHALTUNGSANORDNUNG UND VERFAHREN ZUM BETREIBEN EINER SCHALTUNGSANORDNUNG**

(30) Priorität: 18.09.2018 DE 102018122913
(71) Anmelder: Martin Kfz - Technik GmbH, 86720 Nördlingen (DE)
(72) Erfinder: Frank, Jürgen, 86698 Oberndorf am Lech (DE)
(74) Vertreter: Schorr, Peter Karl

(57) **Zusammenfassung**

Die Erfindung betrifft eine Schaltungsanordnung (2) zum Erzeugen eines Drei-Phasen-Dreh-Felds zumindest an einem elektrischen Verbraucher (4), wie Asynchronmotor, mit mindestens einem einen einphasigen Wechselstrom umfassenden Netzspannungseingang (6), mit mindestens einem mit dem Netzspannungseingang (6) und dem elektrischen Verbraucher (4) verbundenen ersten Phasenstrang (8), dessen transportierte Spannung einen ersten Außenleiter L1 umfasst, mit mindestens einem mit dem Netzspannungseingang (6) und dem elektrischen Verbraucher (4) verbundenen zweiten Phasenstrang (10), dessen transportierte Spannung einen um 120° zum ersten Außenleiter L1 versetzten zweiten Außenleiter L2 entspricht, mit mindestens einem Energiespeicher (12), der mit dem Netzspannungseingang (6) verbunden ist und in dem zumindest kurzzeitig elektrische Energie speicherbar ist, mit mindestens einem Schaltelement (14), durch das der Energiespeicher (12) über einen dritten Phasenstrang (16) mit dem elektrischen Verbraucher (4) zum Erzeugen eines dritten Außenleiters L3 verbindbar ist und mit mindestens einer Steuereinheit (18), durch die zumindest ein Triggerpunkt des ersten Phasenstrang (8) erfassbar und das Schaltelement (14) zumindest bei einem erfassten Triggerpunkt der ersten Außenleiters L1 des ersten Phasenstrangs (8) zum Schließen oder Öffnen des dritten Phasenstrangs (16) und zum Erzeugen des dritten Außenleiters ansteuerbar ist.

## Beschreibung

Die Erfindung betrifft eine Schaltungsanordnung und Verfahren zum Betreiben einer Schaltungsanordnung.

Schaltungsanordnungen sowie Verfahren zum Betreiben derartiger Schaltungsanordnungen, sind aus dem Stand der Technik in unterschiedlichen Formen bekannt. Diese dienen beispielsweise dazu, aus einem Einphasennetz ein Dreiphasendrehfeld zu erzeugen.

In einem derartigen Dreiphasendrehfeld laufen die einzelnen Phasenwinkel um jeweils 120° phasenversetzt zueinander. Derartige Schaltungsanordnungen können beispielsweise verwendet werden, um Asynchronmotoren an ein Einphasennetz anzuschließen.

Derartige Schaltungsanordnungen umfassen beispielsweise so genannte Steinmetz-Schaltungen oder speziell gefertigte Kondensatormaschinen für 90° Drehfelder.

Die aus dem Stand der Technik bekannten Schaltungsanordnungen weisen jedoch hohe Anlaufströme und schlechte Wirkungsgrade auf. Darüber hinaus umfassen diese, insbesondere am Beispiel der Steinmetzschaltung, ein elektrisches Drehfeld von < 90°.

Aufgabe eines Ausführungsbeispiels der Erfindung ist, eine Schaltungsanordnung sowie ein Verfahren zum Betreiben einer Schaltungsanordnung vorzuschlagen, durch die ein verbessertes Dreiphasendrehfeld erzeugbar ist.

Diese Aufgabe wird gelöst durch eine Schaltungsanordnung zum Erzeugen eines Drei-Phasen-Dreh-Felds zumindest an einem elektrischen Verbraucher, wie Asynchronmotor, mit mindestens einem einen einphasigen Wechselstrom umfassenden Netzspannungseingang, mit mindestens einem mit dem Netzspannungseingang und dem elektrischen Verbraucher verbundenen ersten Phasenstrang, dessen transportierte Spannung einen ersten Außenleiter L1 umfasst, mit mindestens einem mit dem Netzspannungseingang und dem elektrischen Verbraucher verbundenen zweiten Phasenstrang , dessen transportierte Spannung einen um 120° zum ersten Außenleiter L1 versetzten zweiten Außenleiter L2 entspricht, mit mindestens einem Energiespeicher, der mit dem Netzspannungseingang verbunden ist und in dem zumindest kurzzeitig elektrische Energie speicherbar ist, mit mindestens einem Schaltelement, durch das der Energiespeicher über einen dritten Phasenstrang mit dem elektrischen Verbraucher zum Erzeugen eines dritten Außenleiters L3 verbindbar ist und mit mindestens einer Steuereinheit, durch die zumindest ein Triggerpunkt des ersten Phasenstrangs erfassbar und das Schaltelement zumindest bei einem erfassten Triggerpunkt der ersten Außenleiters L1 des ersten Phasenstrangs zum Schließen oder Öffnen des dritten Phasenstrangs und zum Erzeugen des dritten Außenleiters ansteuerbar ist.

Der Triggerpunkt umfasst einen Winkel des ersten Außenleiters. Hierbei kann der der Triggerpunkt einen Nulldurchgang oder einen sonstigen Winkel umfassen.

Dadurch, dass das Schaltelement durch die Steuereinheit derart ansteuerbar ist, dass beim Erfassen eines Triggerpunkts des ersten Außenleiters des ersten Phasenstrangs ansteuerbar ist, um in einen dritten Phasenstrang eines dritten Außenleiters L3 zu erzeugen, läuft der dritte Außenleiter L3 des dritten Phasenstrangs dem ersten Außenleiter L1 um 240° nach. Hierdurch sind drei richtige Außenleiter zu je 120° Phasenwinkel erzeugbar, so dass der zweite Außenleiter L2 dem ersten Außenleiter L1 um 120° nachläuft sowie der dritte Außenleiter L3 dem ersten Außenleiter L1 um 240° nachläuft.

Darüber hinaus sind durch den zuvor genannten Aufbau geringere Anlaufströme und geringere Verlust vorhanden. Ferner lässt sich eine derartige Schaltungsanordnung ohne akustisch wahrnehmbares oder zumindest reduziertes Brummen betreiben.

Schließlich lässt sich durch die erfindungsgemäße Schaltungsanordnung eine im Vergleich zum Stand der Technik höhere Motorleistung des Asynchronmotors erzeugen.

Bei dem Netzspannungseingang kann es sich um eine einphasige Netzspannung L/N, beispielsweise mit 230 V und 50 Hz, handeln. Dieses kann, wenn die die Schaltungsanordnung in einem im Haushaltsgerät, Industriemaschine und/oder Kraftfahrzeug verbaut ist, ein Lichtstromnetz umfassen.

Die Schaltungsanordnung kann Element einer beliebigen elektrischen Schaltung sein, um eine einphasige Netzspannung in eine dreiphasige umzuwandeln. Bei dem elektrischen Verbraucher kann es sich um einen Asynchronmotor handeln.

Es erweist sich als vorteilhaft, wenn die Steuereinheit mindestens ein Sensormittel, mindestens eine Recheneinheit und/oder mindestens einen durch die Recheneinheit ansteuerbaren Signalgeber umfasst, durch den ein Signal zum Öffnen oder zum Schließen des Schaltelements erzeugbar und an das Schaltelement leitbar und/oder sendbar ist. Hierdurch lässt sich ein um 240° zum ersten Außenleiter L1 versetztes Erzeugen des dritten Außenleiters L3 im dritten Phasenstrang, zeitgenau steuern.

Bei einer Weiterbildung letztgenannter Ausführungsform, erweist es sich als vorteilhaft, wenn das mindestens eine Sensormittel eine Synchronisationsschaltung, wie Trigger, Spannungswächter-Trigger, Operationsverstärker, diskreten Transistor, Schaltregler und/oder Netzwerkanalysator, umfasst, durch die zumindest ein Negativ/Positiv Übergang zumindest des ersten Außenleiters L1 des ersten Phasenstrangs erfassbar ist.

Durch die Synchronisationsschaltung sind Phasenwinkel, zumindest am ersten Außenleiter L1 des ersten Phasenstrangs bei 0°/positiv, bzw. 180°/negativ oder entsprechend anderer fixen Positionen erfassbar. Diese so gewonnen Negativ/Positiv -Übergänge sind an die Recheneinheit weiterleitbar.

Darüber hinaus sind durch die Synchronisationsschaltung Zeitabstände der so genannten Triggerpunkte erfassbar und eine Netzfrequenz ermittelbar. Diese ist berechenbar durch den formellen Zusammenhang:
f = 1/T. In Worten: Netzfrequenz entspricht 1 geteilt durch Zeitabstand in Sekunden.

Hierdurch ist es ermöglicht, auf Netzfrequenzschwankungen flexibel zu reagieren.

Darüber hinaus erweist es sich als vorteilhaft, wenn die Recheneinheit eine CPU und/oder wenn der durch die Recheneinheit ansteuerbare Signalgeber eine sinoide Pulsweitenmodulation umfasst, wobei die Recheneinheit einen in der Recheneinheit hinterlegten Algorithmus zum Ansteuern des Signalgebers aufweist, der eine Sinusfunktion umfasst oder auf ein in der Recheneinheit hinterlegtes Tabellenwerk zurückgreift.

Der Algorithmus, bzw. das Tabellenwerk kann in der Recheneinheit hinterlegt sein oder in einer der Recheneinheit funktional zugeordneten Speichereinheit. Durch den Algorithmus, bzw. durch das Tabellenwerk, ist die sinoide Pulsweitenmodulation berechenbar und der Signalgeber entsprechend ansteuerbar.

Darüber hinaus kann in der Recheneinheit eine Drehrichtungsänderung (Links-/Rechtslauf) hinterlegt sein. Ferner ist bei einer Ausführungsform der Recheneinheit eine Auswertung und Anpassung an die Netzfrequenz sowie eine Anpassung an Netzfrequenzschwankungen erfassbar und ausgleichbar.

Ferner ist es denkbar, dass in der Recheneinheit eine Strombegrenzung, insbesondere eine Anlauf- und Stopfunktion, hinterlegbar ist. Schließlich kann in der Recheneinheit eine Drehmomentregelung zur Leistungsreduktion bei einfachen Drehzahlsteuerungen (Lüfter, Antriebe oder Ähnliches) vorgesehen sein.

Darüber hinaus ist bei einer Ausführungsform der Schaltungsanordnung vorgesehen, dass das Schaltelement eine Endstufe mit mindestens einem Treiber, wie Transistor, insbesondere Bipolartransistor mit isolierter Gate-Elektrode, Metall-Oxid-Halbleiter-Feldeffekttransistor (MOSFET), Bipolartransistor, SiC MOSFET (Silicon Carbide) und/oder BIMOSFET. umfasst.

Durch das Schaltelement, insbesondere durch die Endstufe, werden schwache Steuersignale der Recheneinheit, insbesondere der CPU, in leistungsstarke und spannungshohe Signale umgewandelt.

Darüber hinaus erweist es sich als vorteilhaft, wenn der Energiespeicher mindestens ein Energiespeichermittel, wie Batterie und/oder Kondensator, aufweist und/oder wenn der Energiespeicher mindestens einen Transformator umfasst.

Durch den Energiespeicher ist elektrische Energie speicherbar, bzw. pufferbar, die zum Leistungszeitpunkt der dritten Außenleiter zur Verfügung steht, um den dritten Außenleiter L3 zu erzeugen. Zu diesem Zeitpunkt kann beispielsweise keine Energie aus der Netzspannung abgenommen werden, da diese sich zu diesem Zeitpunkt auf einem niedrigeren Spannungsniveau befindet.

Die Batterie kann beispielsweise auch eine Fahrzeugbatterie umfassen.

Ferner erweist es sich als vorteilhaft, wenn der Energiespeicher mindestens einen zwischen erstem Phasenstrang und Energiespeichermittel und/oder zwischen zweitem Phasenstrang und Energiespeichermittel angeordneten Gleichrichter, wie Diode, umfasst.

Bei einer Ausführungsform der Schaltungsanordnung ist beispielsweise ein Energiespeichermittel vorgesehen, das über einen einzigen Gleichrichter mit dem ersten Phasenstrang verbunden ist. Solchenfalls ist das Speichermittel ausschließlich über den ersten Phasenstrang mit elektrischer Energie aufladbar.

Bei einem weiteren Ausführungsbeispiel der Schaltungsanordnung sind zwei Energiespeicher vorgesehen, einer für die positive und einer für die negative Halbwelle, die in Reihe zur D2 Zweipuls-Verdopplerschaltung oder Greinacher Schaltung geschaltet sind.

Schließlich erweist es sich als vorteilhaft, wenn die Schaltungsanordnung mindestens ein zwischen Schaltelement und elektrischem Verbraucher angeordnetes Messmittel umfasst, das insbesondere mittelbar oder unmittelbar mit der Recheneinheit verbindbar oder verbunden ist.

Durch das Vorsehen eines Messmittels ist beispielsweise ein Strom innerhalb der Schaltungsanordnung erfassbar und im Zusammenwirken mit der Steuereinheit begrenzbar sowie ein Hochlaufstrom beim Einschalten der Schaltungsanordnung erfassbar und vorprogrammierbar.

Darüber hinaus wird die Aufgabe gelöst durch ein Verfahren zum Betreiben einer Schaltungsanordnung zum Erzeugen eines Drei-Phasen-Dreh-Felds mit mindestens einem der zuvor genannten Merkmale und mit den Schritten:
a. Inbetriebnahme der Schaltungsanordnung durch Einschalten oder Zuschalten des Netzspannungseingangs;
b. Ggf. Aufladen des Energiespeichers durch den Netzspannungseingang;
c. Erfassen eines geeigneten Triggerpunktes, wie z.B. eines Negativ/Positiv - Übergangs zumindest am ersten Außenleiter des ersten Phasenstrangs durch das durch das Sensormittel der Steuereinheit;
d. Berechnen eines Öffnungszeitpunkts des Schaltelements, bei dem eine zum ersten Außenleiter um 240° versetzter dritter Außenleiter durch die Energie des Energiespeichers erzeugbar ist, durch die Recheneinheit der Steuereinheit und Öffnen oder Schließen des Schaltelements durch einen Signalgeber der Steuereinheit bei Erreichen Öffnungs- oder Schließzeitpunkt.

Bei einer Weiterbildung des Verfahrens sind nachfolgende Schritte vorgesehen:
a. Hinterlegen eines Hochlaufstroms in der Recheneinheit und/oder Erfassen des Hochlaufstroms durch das Messmittel;
b. Begrenzen des Hochlaufstroms durch die Steuereinheit.

Weitere Merkmale, Einzelheiten und Vorteile der Erfindung ergeben sich aus den beigefügten Patentansprüchen, aus der zeichnerischen Darstellung und nachfolgenden Beschreibung zweier bevorzugter Ausführungsformen der Schaltungsanordnung sowie des Verfahrens zum Betreiben einer Schaltungsanordnung.

In der Zeichnung zeigt:
- Figur 1: Ein schematisches, elektrisches Schaltdiagramm eines ersten Ausführungsbeispiels der Schaltungsanordnung;
- Figur 2: Ein schematisches, elektrisches Schaltdiagramm eines zweiten Ausführungsbeispiels der Schaltungsanordnung;
- Figur 3: Ein schematisches Ablaufdiagramm des erfindungsgemäßen Verfahrens.

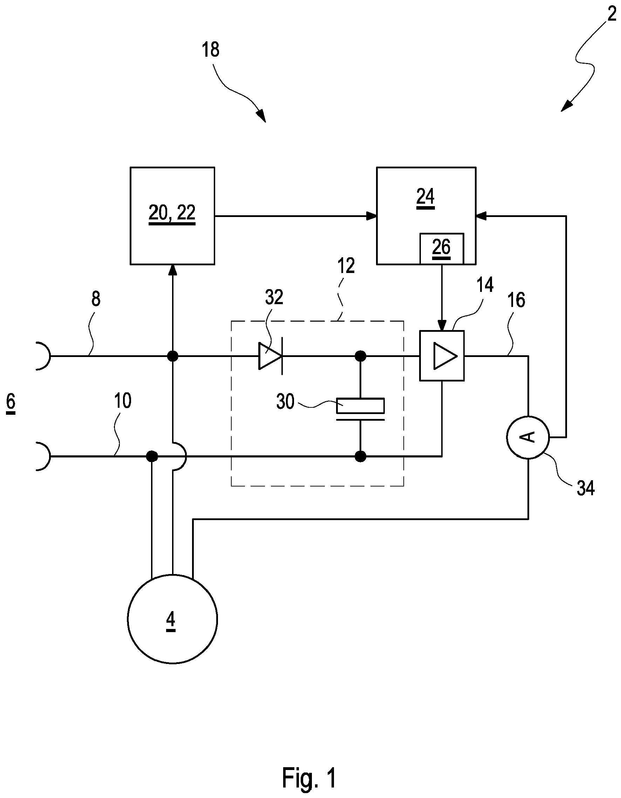

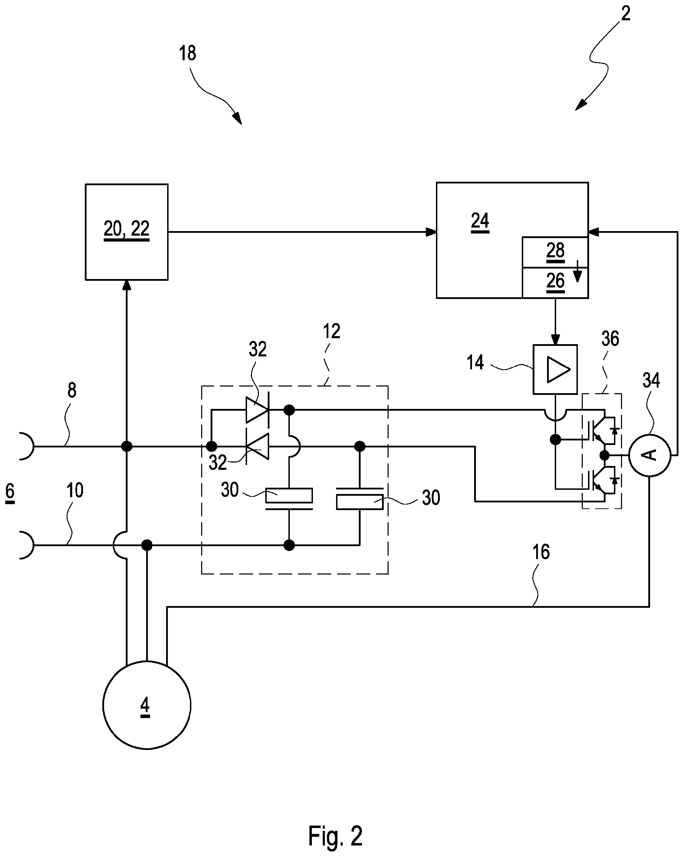

Die Figuren 1 und 2 zeigen jeweils einen elektrischen Schaltplan von Ausführungsbeispielen einer insgesamt mit dem Bezugszeichen 2 versehenen Schaltungsanordnung. Die Schaltungsanordnung 2 dient dem Erzeugen eines Drei-Phasen-Dreh-Felds. Dieses ist an einem elektrischen Verbraucher 4, wie Asynchronmotor, erzeugbar.

Bei den in den Figuren gezeigten Ausführungsbeispielen umfasst die Schaltungsanordnung 2 einen Netzspannungseingang 6. Vom Netzspannungseingang 6 führt ein erster Phasenstrang (=u1) 8 zum elektrischen Verbraucher 4. In dem ersten Phasenstrang 8 umfasst die in dem ersten Phasenstrang 8 transportierte Spannung einen ersten Außenleiter L1. Darüber hinaus umfasst die Schaltungsanordnung 2 einen mit dem Netzspannungseingang 6 und dem elektrischen Verbraucher 4 verbundenen zweiten Phasenstrang (=v1)10, dessen transportierte Spannung eine um 120° zum ersten Außenleiter des ersten Phasenstrangs 8 versetzten zweiten Außenleiter umfasst.

Darüber hinaus umfasst die Schaltungsanordnung 2 einen Energiespeicher 12, der mit dem Netzspannungseingang 6 verbunden ist und in dem zumindest kurzzeitig elektrische Energie speicherbar ist.

Darüber hinaus umfasst die Schaltungsanordnung 2 in den in den Figuren 1 und 2 gezeigten Ausführungsbeispielen jeweils ein Schaltelement 14, durch das der Energiespeicher 12 über einen dritten Phasenstrang 16 mit dem elektrischen Verbraucher 4 verbindbar ist.

Darüber hinaus umfasst die Schaltungsanordnung 2 bei den in den Figuren 1 und 2 gezeigten Ausführungsbeispielen, eine Steuereinheit 18, durch die zumindest ein fixer Triggerpunkt des ersten Phasenstrangs 8 erfasst wird und das Schaltelement 14 zumindest bei einem erfassten Triggerpunkt am ersten Außenleiter des ersten Phasenstrangs 8 zum Schließen des dritten Phasenstrangs 16 und zum Erzeugen eines dritten Außenleiters ansteuerbar ist.

Den beiden Ausführungsbeispielen der Schaltungsanordnung 2 gemäß Figuren 1 und 2 ist jeweils gemeinsam, dass die Steuereinheit 18 jeweils ein Sensormittel 20 umfasst. Das Sensormittel 20 umfasst bei den in den Figuren gezeigten Ausführungsbeispielen eine Synchronisationsschaltung 22, wie beispielsweise einen Trigger, durch die zumindest ein Positiv/Negativ-Übergang zumindest am ersten Außenleiter des ersten Phasenstrangs 8 erfassbar ist.

Darüber hinaus umfassen die Steuereinheiten 18 jeweils eine Recheneinheit 24 sowie einen durch die Recheneinheit 24 ansteuerbaren Signalgeber 26.

Durch den Signalgeber 26 ist ein Signal zum Öffnen oder zum Schließen des Schaltelements 14 erzeugbar und an das Schaltelement 14 leitbar und/oder sendbar. Bei dem Signalgeber 26 kann es sich beispielsweise um einen pulsweiten Modulations-Generator handeln.

Die Recheneinheiten 24 der Steuereinheiten 18 können einen CPU umfassen, in der ein Algorithmus oder ein Tabellenwerk 28 hinterlegbar ist.

Figur 1 zeigt ein erstes Ausführungsbeispiel der Schaltungsanordnung 2, bei der der Energiespeicher 12 ein mit dem ersten Phasenstrang 8 verbundenes Energiespeichermittel 30 umfasst. Zwischen dem Energiespeichermittel 30 und dem ersten Phasenstrang 8 ist ein Gleichrichter 32, wie Diode, angeordnet. Hierdurch wird das Energiespeichermittel 30 des Energiespeichers 12 des ersten Ausführungsbeispiels immer dann mit elektrischer Energie geladen, wenn der erste Phasenstrang 8 in einer von einer Nullphase abweichenden Außenleiter befindlich ist.

Darüber hinaus ist bei dem in Figur 1 gezeigten Ausführungsbeispiel ein Messmittel 34 vorgesehen, dass mit der Recheneinheit 24 verbunden ist.

Figur 2 zeigt ein Ausführungsbeispiel der Schaltungsanordnung 2, bei dem der Energiespeicher 12 zwei Energiespeichermittel 30 und zwei Gleichrichter 32 umfasst. Hierdurch wird durch diese D2 Zweipuls-Verdopplerschaltung eine Betriebsspannung von +/-310V erzeugt und zwischengespeichert.

Darüber hinaus umfasst das Ausführungsbeispiel gemäß Figur 2 eine Endstufe 36, die dem Schaltelement 14 funktional zuordenbar ist und durch die schwache Steuersignale der Recheneinheit 24 in leistungsstarke und spannungshohe Signale umwandelbar ist.

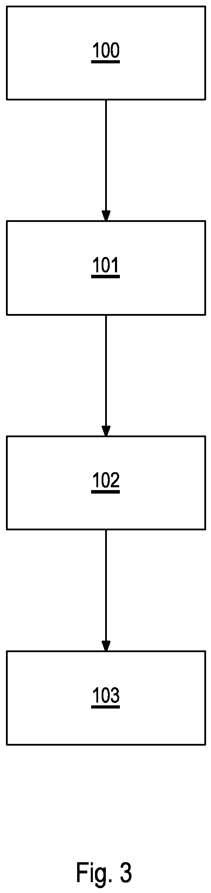

Figur 3 zeigt ein schematisches Ablaufdiagramm der Funktionsweise der Schaltungsanordnung 2. Unter Zuhilfenahme der Schaltungsanordnungen 2 der Figuren 1 und 2 wird nachfolgend das Verfahren beschrieben:
In einem ersten Schritt 100 wird die Schaltungsanordnung 2 in Betrieb genommen. Dieses erfolgt durch Einschalten oder Zuschalten des Netzspannungseingangs 6.

In einem nachfolgenden Schritt 101 wird der Energiespeicher 12 durch die Netzspannung aufgeladen. Dies erfolgt jeweils so lange, so lange die jeweiligen Außenleitern sich nicht in ihrem Nulldurchgang befinden.

In einem weiteren Schritt 102 wird ein Negativ/Positiv-Übergang, wie Nulldurchgang der Netzspannung durch das Sensormittel 20 der Steuereinheit 18 erfasst.

Hieran anschließend wird in einem Schritt 103 ein Schließungs- und Öffnungszeitpunkt des Schaltelements 14 Seitens der Recheneinheit 24 berechnet, an dem eine zum ersten Außenleiter L1 um 240° versetzter dritter Außenleiter durch die Energie des Energiespeichers 12 erzeugbar ist. Bei Erreichen dieses Schließ- bzw. Öffnungszeitpunkts wird das Schaltelement 14 geschlossen bzw. geöffnet, was durch den Signalgeber 26 der Steuereinheit 18 erfolgt.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Schaltungsanordnung
- 4: elektrischer Verbraucher
- 6: Netzspannungseingang
- 8: erster Phasenstrang
- 10: zweiter Phasenstrang
- 12: Energiespeicher
- 14: Schaltelement
- 16: dritter Phasenstrang
- 18: Steuereinheit
- 20: Sensormittel
- 22: Synchronisationsschaltung
- 24: Recheneinheit
- 26: Signalgeber
- 28: Tabellenwerk
- 30: Energiespeichermittel
- 32: Gleichrichter
- 34: Messmittel
- 36: Endstufe

## Patentansprüche

1. Schaltungsanordnung (2) zum Erzeugen eines Drei-Phasen-Dreh-Felds zumindest an einem elektrischen Verbraucher (4), wie Asynchronmotor, mit mindestens einem einen einphasigen Wechselstrom umfassenden Netzspannungseingang (6), mit mindestens einem mit dem Netzspannungseingang (6) und dem elektrischen Verbraucher (4) verbundenen ersten Phasenstrang (8), dessen transportierte Spannung einen ersten Außenleiter L1 umfasst, mit mindestens einem mit dem Netzspannungseingang (6) und dem elektrischen Verbraucher (4) verbundenen zweiten Phasenstrang (10), dessen transportierte Spannung einen um 120° zum ersten Außenleiter L1 versetzten zweiten Außenleiter L2 entspricht, mit mindestens einem Energiespeicher (12), der mit dem Netzspannungseingang (6) verbunden ist und in dem zumindest kurzzeitig elektrische Energie speicherbar ist, mit mindestens einem Schaltelement (14), durch das der Energiespeicher (12) über einen dritten Phasenstrang (16) mit dem elektrischen Verbraucher (4) zum Erzeugen eines dritten Außenleiters L3 verbindbar ist und mit mindestens einer Steuereinheit (18), durch die zumindest ein Triggerpunkt des ersten Phasenstrang (8) erfassbar und das Schaltelement (14) zumindest bei einem erfassten Triggerpunkt der ersten Außenleiters L1 des ersten Phasenstrangs (8) zum Schließen oder Öffnen des dritten Phasenstrangs (16) und zum Erzeugen des dritten Außenleiters ansteuerbar ist.

2. Schaltungsanordnung (2) nach Anspruch 1, **dadurch gekennzeichnet, dass** die Steuereinheit (18) mindestens ein Sensormittel (20), mindestens eine Recheneinheit (24) und/oder mindestens einen durch die Recheneinheit (24) ansteuerbaren Signalgeber (26) umfasst, durch den ein Signal zum Öffnen oder zum Schließen des Schaltelements (14) erzeugbar und an das Schaltelement (14) leitbar und/oder sendbar ist.

3. Schaltungsanordnung (2) nach Anspruch 2, **dadurch gekennzeichnet, dass** das mindestens eine Sensormittel (20) eine Synchronisationsschaltung (22), wie Trigger, Spannungswächter-Trigger, Operationsverstärker, diskreten Transistor, Schaltregler und/oder Netzwerkanalysator, umfasst, durch die zumindest ein Positiv/Negativ-Übergang am Netzspannungseingang (6) erfassbar ist.

4. Schaltungsanordnung (2) nach mindestens einem der vorhergehenden Ansprüche 2 oder 3, **dadurch gekennzeichnet, dass** die Recheneinheit (24) eine CPU und/oder dass der durch die Recheneinheit (24) ansteuerbare Signalgeber (26) eine sinoide Pulsweitenmodulation umfasst, wobei die Recheneinheit (24) einen in der Recheneinheit (24) hinterlegten Algorithmus zum Ansteuern des Signalgebers (26) aufweist, der eine Sinusfunktion umfasst oder auf ein in der Recheneinheit (24) hinterlegtes Tabellenwerk (28) zurückgreift.

5. Schaltungsanordnung (2) nach mindestens einem der vorhergehenden Ansprüche, **dadurch gekennzeichnet, dass** das Schaltelement (14) eine Endstufe mit mindestens einem Treiber, sowie Leistungstransistor, insbesondere einen Bipolartransistor mit isolierter Gate-Elektrode, Metall-Oxid-Halbleiter-Feldeffekttransistor (MOSFET), Bipolartransistor, SiC MOSFET (Silicon Carbide) und/oder BIMOSFET umfasst.

6. Schaltungsanordnung (2) nach mindestens einem der vorhergehenden Ansprüche, **dadurch gekennzeichnet, dass** das der Energiespeicher (12) mindestens ein Energiespeichermittel, (30) wie Batterie und/oder Kondensator, aufweist und/oder dass der Energiespeicher (12) mindestens einen Transformator umfasst.

7. Schaltungsanordnung (2) nach mindestens einem der vorhergehenden Ansprüche, **dadurch gekennzeichnet, dass** der Energiespeicher (12) mindestens einen zwischen erstem Phasenstrang (8) und Energiespeichermittel (30) und/oder zwischen zweitem Phasenstrang (10) und Energiespeichermittel (30) angeordneten Gleichrichter (32), wie Diode, umfasst.

8. Schaltungsanordnung (2) nach mindestens einem der vorhergehenden Ansprüche, **gekennzeichnet durch** mindestens ein zwischen Schaltelement (14) und elektrischen Verbraucher (4) angeordnetes Messmittel (34), das insbesondere mittelbar oder unmittelbar mit der Recheneinheit (24) verbindbar oder verbunden ist.

9. Verfahren zum Betreiben einer Schaltungsanordnung (2) zum Erzeugen eines Drei-Phasen-Dreh-Felds nach einem der Ansprüche 1 bis 8, mit den Schritten:
a. Inbetriebnahme der Schaltungsanordnung (2) durch Einschalten oder Zuschalten des Netzspannungseingangs (6);
b. Ggf. Aufladen des Energiespeichers (12) durch den Netzspannungseingang (6);
c. Erfassen eines geeigneten Triggerpunktes, wie z.B. eines Negativ/Positiv - Übergangs zumindest am ersten Außenleiter des ersten Phasenstrangs (8) durch das durch das Sensormittel (20) der Steuereinheit (18);
d. Berechnen eines Öffnungszeitpunkts des Schaltelements (14), bei dem eine zum ersten Außenleiter um 240° versetzter dritter Außenleiter durch die Energie des Energiespeichers (12) erzeugbar ist, durch die Recheneinheit (24) der Steuereinheit (18) und Öffnen oder Schließen des Schaltelements (14) durch einen Signalgeber (26) der Steuereinheit (18) bei Erreichen Öffnungs- oder Schließzeitpunkt.

10. Verfahren nach Anspruch 9, mit den Schritten:
a. Hinterlegen eines Hochlaufstroms in der Recheneinheit (24) und/oder Erfassen des Hochlaufstroms durch das Messmittel (34);
b. Begrenzen des Hochlaufstroms durch die Steuereinheit (18)
